# EUROPÄISCHE PATENTSCHRIFT

(11) **EP 3 844 046 B1**
(45) Veröffentlichungstag und Bekanntmachung des Hinweises auf die Patenterteilung: **16.10.2024**
(21) Anmeldenummer: 19742547.3
(22) Anmeldetag: 12.07.2019
(51) Int. Cl.: B62D 1/181

(54) **ELEKTRISCH VERSTELLBARE STEER-BY-WIRE LENKSÄULE UND KRAFTFAHRZEUG**
ELECTRICALLY ADJUSTABLE STEER-BY-WIRE STEERING COLUMN AND MOTOR VEHICLE
COLONNE DE DIRECTION STEER-BY-WIRE À RÉGLAGE ÉLECTRIQUE ET VÉHICULE AUTOMOBILE

(30) Priorität: 28.08.2018 DE 102018214546
(43) Veröffentlichungstag der Anmeldung: 07.07.2021
(73) Patentinhaber: VOLKSWAGEN AKTIENGESELLSCHAFT, 38440 Wolfsburg (DE)
(72) Erfinder: MARX, Peter, 38553 Wasbüttel (DE); PRZYBYLSKI, Mirko, 38100 Braunschweig (DE); KNOPP, Thomas, 38159 Vechelde (DE); KREIS, Christopher, 38126 Braunschweig (DE); WILSKE, Ernst, 39291 Nedlitz (DE)
(86) Internationale Anmeldenummer: PCT/EP2019/068896
(87) Internationale Veröffentlichungsnummer: WO 2020/043387

(56) Entgegenhaltungen:
- WO-A1-2017/097662
- CN-U- 206 691 183
- US-A- 5 010 779

## Beschreibung

Die vorliegende Erfindung betrifft eine elektrisch verstellbare Steer-by-Wire Lenksäule für ein Kraftfahrzeug. Ferner betrifft die Erfindung ein Kraftfahrzeug mit einer gattungsgemäßen Lenksäule.

Es sind Lenksysteme für Kraftfahrzeuge bekannt, bei welchen eine über ein Lenkrad in eine Lenksäule eingebrachte Lenkkraft über elektromechanische Mittel an eine Lenkachse weitergeleitet werden. Bei diesen Systemen besteht eine direkte mechanische Kopplung zwischen dem Lenkrad und der Lenkachse. Insbesondere bei Kraftfahrzeugen mit einem autonomen Fahrmodus hat es sich bewährt, das Lenkrad mechanisch von der Lenkachse zu entkoppeln.

Lenksäulen mit einer mechanischen Entkopplung von Lenkrad und Lenkachse werden auch als "Steer-by-Wire" Lenksäulen bezeichnet, da eine Übertragung eines Lenkradeinschlagwinkels des Lenkrads an die Lenkachse ausschließlich elektronisch erfolgt. Gattungsgemäße Lenksäulen weisen daher zur Erfassung des Lenkradeinschlagwinkels eine spezielle Sensorik auf. Eine Steuerungsvorrichtung ist ausgebildet, eine Lenkaktuationsvorrichtung zum Bewegen der Lenkachse in Abhängigkeit des erfassten Lenkradeinschlagwinkels anzusteuern. Ebenso ist die Sensorik ausgebildet, eine Stellung der Lenkachse zu ermitteln, um beispielsweise das Steuern der Lenkaktuationsvorrichtung zu kontrollieren beziehungsweise Winkelabweichungen zwischen dem Lenkrad und der Lenkachse auszugleichen.

Um dem Fahrer eines Kraftfahrzeugs mit einer Steer-by-Wire Lenksäule ein möglichst realistisches Fahrgefühl zu vermitteln, werden über die Räder aufgenommene und an die Lenkachse weitergeleitete mechanische Impulse, Kräfte sowie Momente ermittelt und an das Lenkrad - zumindest in modifizierter, insbesondere abgeschwächter Form - weitergeleitet. Ebenso soll eine Lenkstellung der Räder auf das Lenkrad übertragen werden. Hierfür werden sogenannte Force-Feedback Aktuatoren verwendet. Force-Feedback Aktuatoren sind zumeist am beziehungsweise im Lenkrohr der Lenksäule angeordnet und weisen einen Generator zum Simulieren der mechanischen Impulse, Kräfte, Momente oder dergleichen auf. Der Generator kann beispielsweise einen Elektromotor aufweisen.

Aus Gründen der Fahrsicherheit sowie des Fahrkomforts weisen Lenksäulen zumeist eine axiale sowie eine rotatorische Verstellmöglichkeit auf. Auf diese Weise ist eine Lage des Lenkrads relativ zum Fahrer einstellbar und ist somit für verschiedene Fahrer des Kraftfahrzeugs individuell anpassbar. Beim einem autonomen Fahrbetrieb ist ein Eingreifen seitens des Fahrers nicht erforderlich, sodass das Lenkrad lediglich einen Freiraum des Fahrers begrenzt. Daher ist es vorteilhaft, die Lenksäule derart zu gestalten, dass das Lenkrad vollständig oder nahezu vollständig im Cockpit des Kraftfahrzeugs versenkbar ist. Zur Steigerung des Komforts weisen moderne Steer-by-Wire Lenksäulen zudem eine automatische Verstellbarkeit auf.

Das Dokument US 5 010 779 A offenbart eine höhenverstellbare Lenksäule mit einer konventionellen mechanischen Anbindung des Lenkrads mit der Lenkachse.

Aus der WO 2017/097662 A1 ist beispielsweise eine solche Lenksäule bekannt, welche über jeweils einen elektrischen Antrieb eine translatorische sowie eine rotatorische Verstellmöglichkeit des Lenkrads bietet. Die rotatorische Verstellbarkeit ist über ein Kniegelenk realisiert, welches mittels eines Elektromotors und eines daran gekoppelten Spindeltriebs verschwenkbar ist. Eine derartige Lenksäule hat insbesondere den Nachteil, dass die verwendeten Bauteile, insbesondere der Elektromotor zur Verstellung eines Winkels des Lenkrads, einen relativ großen Platzbedarf aufweisen. Zudem ist eine vollständige Versenkung des Lenkrads im Cockpit aufgrund des Platzbedarfs der verwendeten Bauteile nicht gewährleistbar. Schließlich weisen bekannte elektrisch verstellbare Steer-by-Wire Lenksäulen ein relativ hohes Eigengewicht auf. Dies schlägt sich insbesondere in der Montagefreundlichkeit sowie im Kraftstoffverbrauch des Fahrzeugs negativ nieder.

Es ist daher Aufgabe der vorliegenden Erfindung, die voranstehend beschriebenen Nachteile bei einer elektrisch verstellbaren Steer-by-Wire Lenksäule für ein Kraftfahrzeug sowie einem Kraftfahrzeug mit einer gattungsgemäßen Lenksäule zu beheben oder zumindest teilweise zu beheben. Insbesondere ist es Aufgabe der vorliegenden Erfindung eine Lenksäule und ein Kraftfahrzeug zu schaffen, die auf eine einfache und kostengünstige Art und Weise eine verbesserte Verschwenkbarkeit des Lenkrads ermöglichen und/oder einen verhältnismäßig geringen Bauraum beziehungsweise ein verhältnismäßig geringes Eigengewicht aufweisen.

Voranstehende Aufgabe wird durch die Patentansprüche gelöst. Demnach wird die Aufgabe durch eine elektrisch verstellbare Steer-by-Wire Lenksäule für ein Kraftfahrzeug mit den Merkmalen des unabhängigen Anspruchs 1 sowie durch ein Kraftfahrzeug mit den Merkmalen des nebengeordneten Anspruchs 8 gelöst. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Lenksäule beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch eine elektrisch verstellbare Steer-by-Wire Lenksäule für ein Kraftfahrzeug gelöst. Die Lenksäule weist eine teleskopierbare Lenkrohranordnung mit einer Lenkradanbindungsschnittstelle zum Anbinden eines Lenkrads, einem Force-Feedback Aktuator zum Simulieren einer Übertragung mechanischer Kräfte und/oder Impulse von einer Fahrbahn über Räder des Kraftfahrzeugs zur Lenkradanbindungsschnittstelle und eine Lenkrohrhaltevorrichtung mit einer Cockpitanbindungsschnittstelle zum Anbinden der Lenkrohrhaltevorrichtung an einen Cockpitträger des Kraftfahrzeugs sowie einer Lenkrohrlagerung auf. Die Lenkrohranordnung ist über die Lenkrohrlagerung um eine horizontale Schwenkachse relativ zur Cockpitanbindungsschnittstelle schwenkbar gelagert. Erfindungsgemäß weist die Lenksäule einen Zahnstangenabschnitt und einen Elektromotor mit einer Kämmvorrichtung zum Kämmen mit dem Zahnstangenabschnitt auf, wobei der Zahnstangenabschnitt und die Kämmvorrichtung derart an der Lenksäule angeordnet sind, dass durch Antreiben der Kämmvorrichtung mittels des Elektromotors die Lenkrohranordnung relativ zur Cockpitanbindungsschnittstelle um die Schwenkachse verschwenkbar ist. Die Lenkrohrhaltevorrichtung weist eine äußere Haltevorrichtung und eine innere Haltevorrichtung auf, wobei die innere Haltevorrichtung über die Lenkrohrlagerung an der äußeren Haltevorrichtung um die Schwenkachse drehbar gelagert ist. Zudem weisen die innere Haltevorrichtung zwei parallel zueinander angeordnete sowie voneinander beabstandete Zahnstangenabschnitte und der Elektromotor zwei Kämmvorrichtungen zum Kämmen mit jeweils einem der Zahnstangenabschnitte auf, wobei der Elektromotor zwischen den Zahnstangenabschnitten angeordnet ist.

Bei der erfindungsgemäßen Steer-by-Wire Lenksäule ist die Lenkradanbindungsschnittstelle von einer Lenkachse mechanisch getrennt. Vorzugsweise weist die Lenksäule eine spezielle Sensorik zum Ermitteln eines Lenkradeinschlagwinkels des Lenkrads auf. Weiter bevorzugt weist die Lenksäule eine Steuerungsvorrichtung auf, die zum Steuern einer Lenkaktuationsvorrichtung zum Bewegen der Lenkachse in Abhängigkeit des erfassten Einschlagwinkels ausgebildet ist. Alternativ weist die Lenksäule eine elektrische Schnittstelle zum Koppeln mit einer derartigen Steuerungsvorrichtung auf. Weiter bevorzugt weist die Lenksäule eine Sensorik auf oder ist mit einer Sensorik elektrisch koppelbar, welche ausgebildet ist, eine Stellung der Lenkachse zu ermitteln, um beispielsweise das Steuern der Lenkaktuationsvorrichtung zu kontrollieren beziehungsweise Winkelabweichungen zwischen dem Lenkrad und der Lenkachse auszugleichen.

Die Lenkrohranordnung ist teleskopierbar ausgebildet. Hierfür weist die Lenkrohranordnung vorzugsweise ein hohles Lenkrohr sowie eine im Lenkrohr axial geführte Lenkwelle auf. Beispielsweise weist die Lenkrohranordnung eine oder mehrere Zahnstangen auf, mit welchen jeweils eine von einem Elektromotor angetriebene Kämmvorrichtung in Eingriff steht. Durch Antreiben des Elektromotors sind somit das Lenkrohr und die Lenkwelle relativ zueinander axial verschiebbar.

Die Lenkradanbindungsschnittstelle ist zum Anbinden eines Lenkrads an die Lenksäule ausgebildet. Hierfür weist die Lenkradanbindungsschnittstelle beispielsweise eine Montageplatte, einen Montagerahmen oder dergleichen auf, an welcher das Lenkrad anordenbar ist. Ferner weist die Lenkradanbindungsschnittstelle vorzugsweise Durchführungen zum Durchführen von Befestigungsmitteln, insbesondere Schrauben, Bolzen oder dergleichen, auf. Es ist bevorzugt, dass die Lenkradanbindungsschnittstelle einen Formschlussabschnitt, wie beispielsweise einen Absatz, zum relativen Ausrichten des Lenkrads und/oder ein sonstiges Befestigungsmittel, wie beispielsweise eine Gewindestange, zum lösbaren Befestigen des Lenkrads an der Lenkradanbindungsschnittstelle aufweist. Die Lenkradanbindungsschnittstelle ist vorzugsweise an einem ersten Ende der Lenkrohranordnung angeordnet.

Der Force-Feedback Aktuator ist zum Simulieren einer Übertragung mechanischer Kräfte, Impulse oder dergleichen von einer Fahrbahn über Räder des Kraftfahrzeugs zur Lenkradanbindungsschnittstelle ausgebildet. Hierfür weist der Force-Feedback Aktuator vorzugsweise einen Elektromotor auf, welcher von einer Steuerungsvorrichtung zum Simulieren der äußeren mechanischen Einflüsse über die Räder auf die Lenksäule ansteuerbar ist. Der Force-Feedback Aktuator ist weiter bevorzugt ausgebildet, einen Lenkradeinschlagwinkel in Abhängigkeit einer Lenkstellung der Räder des Kraftfahrzeugs einzustellen. Dies ist insbesondere dann von Vorteil, wenn während der Fahrt der autonome Fahrmodus deaktiviert und der manuelle Fahrmodus aktiviert werden soll. Vorzugsweise ist der Force-Feedback Aktuator an einem dem ersten Ende entgegengesetzten zweiten Ende der Lenkrohranordnung angeordnet.

Die Cockpitanbindungsschnittstelle ist zum Anbinden der Lenkrohrhaltevorrichtung an einen Cockpitträger des Kraftfahrzeugs ausgebildet. Hierfür weist die Cockpitanbindungsschnittstelle beispielsweise eine Montageplatte, einen Montagerahmen oder dergleichen auf, welche an dem Cockpitträger anordenbar ist. Vorzugsweise ist die Cockpitanbindungsschnittstelle zum Selbstzentrieren am Cockpitträger ausgebildet. Weiter bevorzugt weist die Cockpitanbindungsschnittstelle mehrere Durchführungen zum Durchführen von Befestigungsmitteln zum Fixieren der Lenksäule am Cockpitträger, insbesondere mittels Bolzen, Schrauben oder dergleichen, auf. Der Cockpitträger ist an eine Karosserie des Kraftfahrzeugs angebunden oder zumindest als Bestandteil der Karosserie ausgebildet. Durch die Anbindung der Lenksäule an den Cockpitträger ist eine relative Lage der Lenksäule im Kraftfahrzeug festlegbar. Durch die Verstellmöglichkeiten der Lenkrohranordnung und der Lenkrohrlagerung ist eine Lage der Lenkradanbindungsschnittstelle und somit des Lenkrads relativ zur Cockpitanbindungsschnittstelle verstellbar.

Mittels der Lenkrohrlagerung ist die Lenkrohranordnung um die horizontale Schwenkachse relativ zur Cockpitanbindungsschnittstelle verschwenkbar gelagert. Dabei kann erfindungsgemäß vorgesehen sein, dass die Lenkrohranordnung über die Lenkrohrlagerung an der Lenkrohrhaltevorrichtung verschwenkbar gelagert ist. Zusätzlich oder alternativ kann die Lenkrohrhaltevorrichtung mehrteilig ausgebildet sein, wobei verschiedene Teile der Lenkrohrhaltevorrichtung mittels der Lenkrohrlagerung relativ zueinander verschwenkbar sind. Vorzugsweise weist die Lenkrohrlagerung mindestens zwei voneinander beabstandete Lagervorrichtungen, insbesondere Wälzlager und/oder Gleitlager oder dergleichen, auf.

Die Kämmvorrichtung ist am Elektromotor angeordnet und von diesem in Rotation versetzbar. Der Elektromotor ist vorzugsweise über ein Getriebe, insbesondere ein Getriebe mit einer Untersetzung, mit der Kämmvorrichtung mechanisch gekoppelt. Vorzugsweise ist die Kämmvorrichtung an einer Getriebeausgangswelle des Getriebes oder einer Rotorwelle des Elektromotors koaxial zu dieser drehfest gehalten. Eine Kämmvorrichtung ist eine Vorrichtung, welche zum Kämmen mit dem Zahnstangenabschnitt ausgebildet ist. Daher kann die Kämmvorrichtung beispielsweise als Zahnrad, Gewindeschnecke oder dergleichen ausgebildet sein. Der Elektromotor ist vorzugsweise relativ zur Cockpitanbindungsschnittstelle ortsfest an der Lenksäule angeordnet. Somit kann erfindungsgemäß vorgesehen sein, dass der Elektromotor an der Cockpitanbindungsschnittstelle gehalten ist. Die Kämmvorrichtung ist ausgebildet und eingerichtet, mit dem Zahnstangenabschnitt im Eingriff zu stehen. Die Kämmvorrichtung ist vorzugsweise als Sinterteil hergestellt.

Der Zahnstangenabschnitt ist vorzugsweise kulissenförmig ausgebildet. Das bedeutet, dass der Zahnstangenabschnitt gekrümmt ausgebildet ist und sich aufgrund der Krümmung nicht auf einer flachen x-y-Ebene erstreckt. Somit erstreckt sich der Zahnstangenabschnitt in x- und z-Richtung. Weiter bevorzugt weist der Zahnstangenabschnitt eine Erstreckung in y-Richtung auf, welche einer Breite des Zahnstangenabschnitts entspricht. Der Zahnstangenabschnitt erstreckt sich vorzugsweise um eine Achse, insbesondere die Schwenkachse der Lenkrohrlagerung, herum. Durch die kulissenförmige Ausbildung des Zahnstangenabschnitts ist mittels einer Rotation der Kämmvorrichtung die Lenkrohranordnung um die Schwenkachse relativ zur Cockpitanbindungsschnittstelle verschwenkbar.

Die Lenksäule ist vorzugsweise spiegelsymmetrisch beziehungsweise zumindest im Wesentlichen spiegelsymmetrisch aufgebaut. Unter einem spiegelsymmetrischen Aufbau wird in diesem Zusammenhang insbesondere ein Aufbau verstanden, welcher ausgebildet ist, Momente, wie beispielsweise Biegemomente, Torsionsmomente oder dergleichen, die beispielsweise durch das miteinander Kämmen von Kämmvorrichtung und Zahnstangenabschnitt bewirkbar sind, durch entsprechend bewirkbare Gegenmomente zu kompensieren.

Die Lenkrohrhaltevorrichtung weist eine äußere Haltevorrichtung und eine innere Haltevorrichtung auf, wobei die innere Haltevorrichtung über die Lenkrohrlagerung an der äußeren Haltevorrichtung um die Schwenkachse drehbar gelagert ist. Vorzugsweise weist die äußere Haltevorrichtung die Cockpitanbindungsschnittstelle auf. Weiter bevorzugt ist der Elektromotor an der äußeren Haltevorrichtung gehalten. Eine Getriebeausgangswelle oder eine Motorwelle des Elektromotors ist vorzugsweise an der äußeren Haltevorrichtung gelagert, insbesondere mittels Wälzlager. Der Elektromotor ist vorzugsweise zwischen zwei Seitenwänden der äußeren Haltevorrichtung angeordnet. Ein solcher modularer Aufbau hat den Vorteil, dass eine Montierbarkeit der Lenksäule verbessert ist.

Ferner weisen die innere Haltevorrichtung zwei parallel zueinander angeordnete sowie voneinander beabstandete Zahnstangenabschnitte und der Elektromotor zwei Kämmvorrichtungen zum Kämmen mit jeweils einem der Zahnstangenabschnitte auf, wobei der Elektromotor zwischen den Zahnstangenabschnitten angeordnet ist. Ein etwaiges an dem Elektromotor angeordnetes Getriebe ist vorzugsweise ebenfalls zwischen den Zahnstangenabschnitten angeordnet. Eine Rotorwelle des Elektromotors beziehungsweise eine Getriebeausgangswelle des Getriebes ist vorzugsweise quer, insbesondere senkrecht, zu den Zahnstangenabschnitten angeordnet. Eine derartige Anordnung hat den Vorteil, dass durch den Elektromotor bewirkte Biegemomente leicht kompensierbar sind.

Eine erfindungsgemäße Lenksäule hat gegenüber herkömmlichen Lenksäulen den Vorteil, dass mit einfachen Mitteln sowie auf eine kostengünstige Art und Weise ein automatisches relatives Verschwenken der Lenkrohranordnung zur Cockpitanbindungsschnittstelle gewährleistet ist. Durch den Zahnstangenabschnitt sowie die Kämmvorrichtung ist die Lenksäule besonders kompakt herstellbar. Somit ist mittels der erfindungsgemäßen Lenksäule auch bei einem vorgegebenen, begrenzten Bauraum ein vollständiges automatisches Versenken des Lenkrads im Cockpit realisierbar.

Es ist erfindungsgemäß bevorzugt, dass der Zahnstangenabschnitt an der inneren Haltevorrichtung und der Elektromotor an der äußeren Haltevorrichtung angeordnet sind. Dabei ist es bevorzugt, wenn eine Ausdehnung des Elektromotors, insbesondere in Richtung einer Rotorachse des Elektromotors, eine seitliche Ausdehnung der inneren Haltevorrichtung, insbesondere eine Ausdehnung quer zur Längserstreckung der Lenkrohranordnung, nicht übersteigt. Eine derartige Anordnung hat den Vorteil, dass diese besonders kompakt ausgebildet ist und somit einen geringen Bauraum benötigt.

In einer besonders bevorzugten Ausgestaltung ist die Kämmvorrichtung als Zahnrad mit einer Außenverzahnung sowie einer Innenverzahnung ausgebildet, wobei die Innenverzahnung mit einem Profil einer Rotorwelle des Elektromotors oder einer Getriebeausgangswelle eines mit dem Elektromotor gekoppelten Getriebes rotationsfest in Eingriff steht. Das Profil weist beispielsweise über den Umfang der Rotorwelle beziehungsweise der Getriebeausgangswelle, insbesondere gleichmäßig, verteilte Längsnuten auf. Aufgrund der Paarung der Innenverzahnung mit dem Profil ist eine Relativrotation von Rotorwelle beziehungsweise Getriebeausgangswelle und der Kämmvorrichtung formschlüssig verhindert. Zudem hat ein derartiges Profil den Vorteil, dass die Kämmvorrichtung bei der Montage seitlich auf die Rotorwelle beziehungsweise Getriebeausgangswelle aufschiebbar ist. Überdies ist ein Zahnrad zum Kämmen mit einem derartigen Zahnstangenabschnitt besonders geeignet.

Vorzugsweise ist die Außenverzahnung als Schrägverzahnung ausgebildet. Die Zähne der Schrägverzahnung weisen einen Verzahnungswinkel zur Rotationsachse der Kämmvorrichtung auf. Bei einer geraden Verzahnung beträgt dieser Verzahnungswinkel 0°. Ebenso weist der Zahnstangenabschnitt eine Schrägverzahnung mit einem entsprechenden Verzahnungswinkel auf, um ein möglichst optimiertes Kämmen zwischen Kämmvorrichtung und Zahnstangenabschnitt zu gewährleisten. Eine Schrägverzahnung hat den Vorteil einer verbesserten Laufruhe sowie einer verminderten Geräuschentwicklung, da das miteinander in Eingriff Kommen und außer Eingriff Gehen der Zähne der Kämmvorrichtung mit den Zähnen des Zahnstangenabschnitts kontinuierlich und nicht wie bei einer geraden Verzahnung schlagartig erfolgt. Ein Drehmoment ist somit gleichmäßiger übertragbar.

Gemäß einer bevorzugten Ausführungsform der Erfindung weist die Lenksäule zwei unmittelbar benachbarte schrägverzahnte Zahnstangenabschnitte auf, wobei die Schrägverzahnungen der benachbarten Zahnstangenabschnitte unterschiedlich ausgerichtet sind. Die benachbarten Zahnstangenabschnitte sind beispielsweise derart nebeneinander angeordnet, dass diese gemeinsam eine v-förmige Verzahnung bilden. Ebenso kann es erfindungsgemäß vorgesehen sein, dass die benachbarten Zahnstangenabschnitte derart versetzt nebeneinander angeordnet sind, dass jeweils ein Zahn eines Zahnstangenabschnitts zwischen zwei Zähnen des anderen Zahnstangenabschnitts mündet. Die Kämmvorrichtungen sind vorzugsweise den Zahnstangenabschnitten sowie deren Verzahnungen entsprechend paarweise nebeneinander angeordnet. Vorzugsweise sind die Kämmvorrichtungen als Gleichteile ausgebildet, welche lediglich um 180° verdreht zueinander auf der Motorwelle beziehungsweise der Getriebeausgangswelle montiert sind. Eine derartige Anordnung hat den Vorteil, dass axiale Kräfte der Motorwelle beziehungsweise der Getriebeausgangswelle hiermit reduzierbar sind. Zudem ist eine Laufruhe weiter verbessert.

Gemäß einer alternativen Ausführungsform einer erfindungsgemäßen Lenksäule ist die Kämmvorrichtung als Schneckenrad ausgebildet. Das Schneckenrad weist vorzugsweise eine Steigung auf, welche zum Kämmen mit dem Zahnstangenabschnitt optimiert ist. Durch den Schneckentrieb und den Zahnstangenabschnitt ist somit ein Schneckentrieb gebildet. Ein Schneckenrad hat den Vorteil, dass besonders hohe Kräfte übertragbar sind, sodass der Elektromotor und/oder das Getriebe kleiner dimensioniert werden können. Hierdurch können Herstellungskosten der Lenksäule reduziert werden. Überdies ist auf diese Weise ein erforderlicher Bauraum der Lenksäule reduzierbar.

Vorzugsweise ist der Elektromotor als Hohlwellenmotor ausgebildet. Ein Hohlwellenmotor weist eine besonders kompakte Bauweise bei verhältnismäßig hoher Leistung auf. Zudem sind Drehmomentspitzen mittels eines Hohlwellenmotors reduzierbar.

Gemäß einem zweiten Aspekt der Erfindung wird die Aufgabe durch ein Kraftfahrzeug mit einer elektrisch verstellbaren Steer-by-Wire Lenksäule gelöst. Die Lenksäule ist als erfindungsgemäße Lenksäule ausgebildet. Die Lenksäule ist über die Cockpitanbindungsschnittstelle an einem Cockpitträger des Kraftfahrzeugs gehalten, insbesondere mittels mehrerer Befestigungsmittel an diesem fixiert. Ein Lenkrad des Kraftfahrzeugs ist an der Lenkradanbindungsschnittstelle der Lenksäule angeordnet und vorzugsweise lösbar an dieser befestigt. Vorzugsweise weist das Kraftfahrzeug ein Cockpit, insbesondere eine Instrumententafel, ein Armaturenbrett oder dergleichen auf, welches am Cockpitträger gehalten ist. Das Cockpit weist vorzugsweise eine Aufnahme zur Aufnahme des Lenkrads auf.

Bei dem beschriebenen Kraftfahrzeug ergeben sich sämtliche Vorteile, die bereits zu einer Lenksäule gemäß dem ersten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise ein automatisches relatives Verschwenken der Lenkrohranordnung zur Cockpitanbindungsschnittstelle gewährleistet ist. Durch den Zahnstangenabschnitt sowie die Kämmvorrichtung weist die Lenksäule einen besonders kompakten Aufbau auf. Dies ermöglicht bei dem vorgegebenen, begrenzten Bauraum am Kraftfahrzeug ein vollständiges automatisches Versenken des Lenkrads im Cockpit.

Eine erfindungsgemäße Lenksäule sowie ein erfindungsgemäßes Kraftfahrzeug werden nachfolgend anhand von Zeichnungen näher erläutert. Es zeigen jeweils schematisch:
- Figur 1: in einer perspektivischen Ansicht eine bevorzugte erste Ausführungsform einer erfindungsgemäßen Lenksäule mit einem angebundenen Lenkrad,
- Figur 2: in einer perspektivischen Ansicht eine bevorzugte Ausführungsform einer Lenkrohrhaltevorrichtung einer erfindungsgemäßen Lenksäule,
- Figur 3: in einer perspektivischen Ansicht eine bevorzugte zweite Ausführungsform einer erfindungsgemäßen Lenksäule,
- Figur 4: in einer perspektivischen Ansicht eine bevorzugte dritte Ausführungsform einer erfindungsgemäßen Lenksäule, und
- Figur 5: in einer Seitenansicht eine bevorzugte Ausführungsform eines erfindungsgemäßen Kraftfahrzeugs.

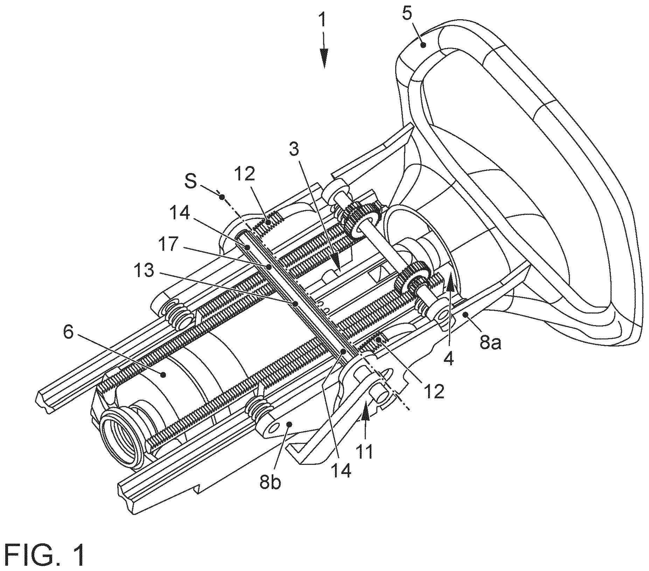

Elemente mit gleicher Funktion und Wirkungsweise sind in den Figuren 1 bis 5 jeweils mit denselben Bezugszeichen versehen.

In Fig. 1 ist eine bevorzugte erste Ausführungsform einer erfindungsgemäßen Lenksäule 1 mit einem angebundenen Lenkrad 5 schematisch in einer perspektivischen Ansicht gezeigt. Die Lenksäule 1 weist eine zentrale, teleskopierbare Lenkrohranordnung 3 sowie eine die Lenkrohranordnung 3 seitlich umgebene Lenkrohrhaltevorrichtung 8 auf. Die Lenkrohranordnung 3 weist an einem ersten Ende einen Force-Feedback Aktuator 6 und an einem zweiten Ende eine Lenkradanbindungsschnittstelle 4 auf, an welcher ein Lenkrad 5 angebunden ist. Die Lenkrohrhaltevorrichtung 8 weist eine äußere Lenkrohrhaltevorrichtung 8a sowie eine innere Lenkrohrhaltevorrichtung 8b auf, wobei die innere Lenkrohrhaltevorrichtung 8b über eine Lenkrohrlagerung 11 um eine Schwenkachse S verschwenkbar an der äußeren Lenkrohrhaltevorrichtung 8a gehalten ist. Die Lenkrohranordnung 3 ist an der inneren Lenkrohrhaltevorrichtung 8b gehalten und somit gemeinsam mit dieser um die Schwenkachse S verschwenkbar.

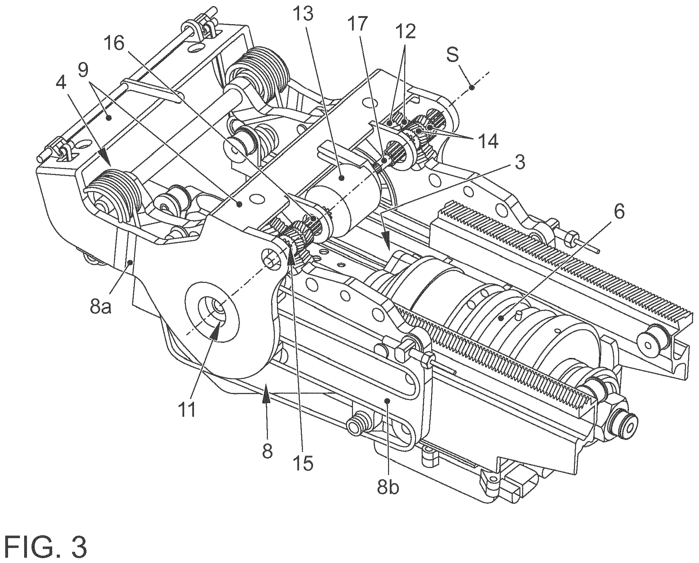

An der inneren Lenkrohrhaltevorrichtung 8b sind zwei voneinander beabstandete Zahnstangenabschnitte 12 ausgebildet, welche jeweils mit einer Kämmvorrichtung in Eingriff stehen. Die Kämmvorrichtung 14 ist an einer Getriebeausgangswelle 17 eines mit einem Elektromotor 13 gekoppelten Getriebes gehalten. Ferner ist der Elektromotor 13 an der äußeren Lenkrohrhaltevorrichtung 8a gehalten. Durch Ansteuern des Elektromotors 13 ist die Kämmvorrichtung 14 antreibbar, sodass die innere Lenkrohrhaltevorrichtung 8b auf diese Weise um die Schwenkachse S relativ zur äußeren Lenkrohrhaltevorrichtung 8a verschwenkbar ist. Eine an der äußeren Lenkrohrhaltevorrichtung 8a ausgebildete Cockpitanbindungsstelle 9 (vgl. Fig. 3) ist in dieser Darstellung der besseren Übersicht halber nicht eingezeichnet. Die Lenksäule 1 ist im Wesentlichen spiegelsymmetrisch ausgebildet.

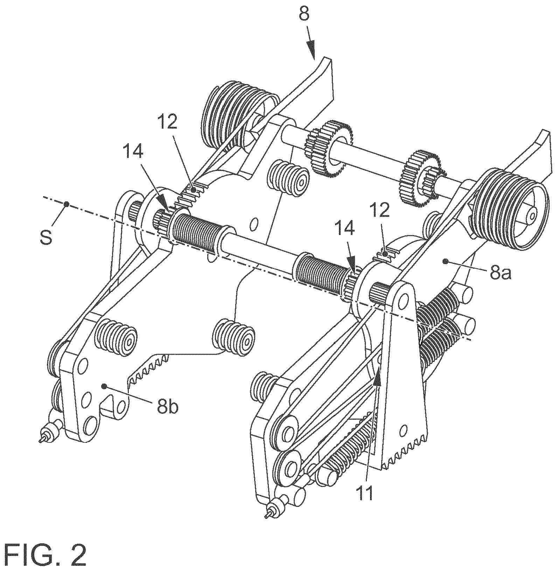

Fig. 2 zeigt eine bevorzugte Ausführungsform einer Lenkrohrhaltevorrichtung 8 einer erfindungsgemäßen Lenksäule 1 schematisch in einer perspektivischen Ansicht. In dieser Darstellung ist besonders gut erkennbar, wie die Kämmvorrichtungen 14 mit den kulissenförmig ausgebildeten Zahnstangenabschnitten 12 der inneren Lenkrohrhaltevorrichtung 8b zum miteinander Kämmen in Eingriff stehen. Ein Elektromotor 13 ist nicht abgebildet. Die Lenkrohrhaltevorrichtung 8 ist im Wesentlichen spiegelsymmetrisch ausgebildet.

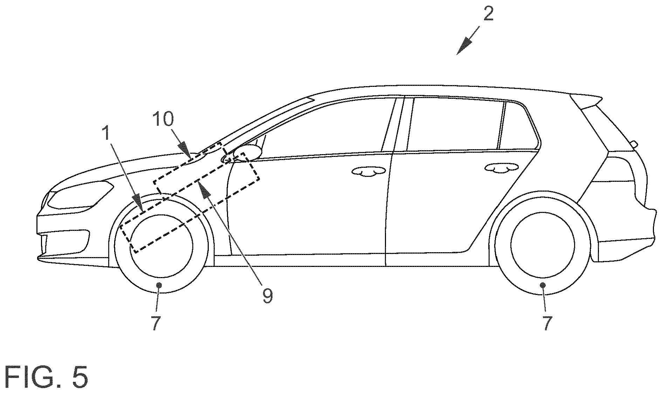

In Fig. 3 ist eine bevorzugte zweite Ausführungsform einer erfindungsgemäßen Lenksäule 1 schematisch in einer perspektivischen Ansicht dargestellt. Bei dieser Ausführungsform weist die innere Lenkrohrhaltevorrichtung 8b insgesamt vier Zahnstangenabschnitte 12 auf, die jeweils paarweise auf gegenüberliegenden Seiten der inneren Lenkrohrhaltevorrichtung 8b angeordnet sind. Die Zahnstangenabschnitte 12 weisen eine Schrägverzahnung auf, wobei die Orientierungen der Schrägverzahnungen der Zahnstangenabschnittpaare unterschiedlich sind. Auf diese Weise bilden die Zahnstangenabschnittpaare jeweils eine v-förmige Verzahnung. Mit jedem der Zahnstangenabschnitte 12 steht eine Kämmvorrichtung 14 im Eingriff. Die Kämmvorrichtungen 14 weisen eine schrägverzahnte Außenverzahnung zum Kämmen mit den Zahnstangenabschnitten 12 sowie eine nicht erkennbare Innenverzahnung 15 auf. Die Innenverzahnung 15 steht mit einem Profil 16 einer mit einem Elektromotor 13 gekoppelten Getriebeausgangswelle 17 eines Getriebes im Eingriff. Auf diese Weise sind die Kämmvorrichtungen 14 bei der Montage leicht auf die Getriebeausgangswelle 17 aufschiebbar und gegen eine Relativrotation zur Getriebeausgangswelle 17 gesichert. Der Elektromotor 13 ist an einer Cockpitanbindungsschnittstelle 9 der äußeren Lenkrohrhaltevorrichtung 8a gehalten. Die Cockpitanbindungsschnittstelle 9 weist mehrere Durchführungen zum Fixieren der Lenksäule 1 an einem nicht dargestellten Cockpitträger 10 (vgl. Fig. 5) eines nicht gezeigten Kraftfahrzeugs 2 (vgl. Fig. 5) auf. Die Getriebeausgangswelle 17 ist an der äußeren Lenkrohrhaltevorrichtung 8a rotierbar gelagert. Wie in dieser Ansicht deutlich dargestellt, ist der Elektromotor 13 zwischen den Kämmvorrichtungen 14 angeordnet. Eine Lenkradanbindungsschnittstelle 4 der Lenkrohranordnung 3 ist durch die innere Lenkrohrhaltevorrichtung 8b verdeckt. Die Lenksäule 1 ist im Wesentlichen spiegelsymmetrisch ausgebildet.

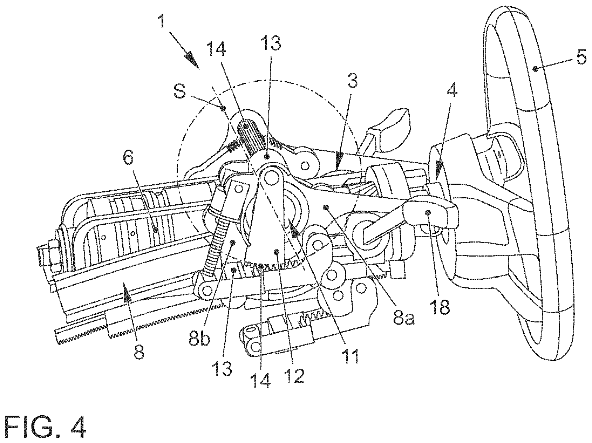

Fig. 4 zeigt eine bevorzugte dritte Ausführungsform einer erfindungsgemäßen Lenksäule 1 schematisch in einer perspektivischen Ansicht. In diese Ausführungsform unterscheidet sich im Wesentlichen von den zuvor beschriebenen Ausführungsformen in dem Merkmal, dass die Kämmvorrichtung 14 als Schneckenrad ausgebildet ist. Der Elektromotor 13 und die Kämmvorrichtung 14 sind an einer Außenseite der äußeren Lenkrohrhaltevorrichtung 8a angeordnet. Zudem weist die Lenksäule 1 einen Hebelarm 18 zum Entkoppeln der Kämmvorrichtung 14 vom Zahnstangenabschnitt 12 auf. Eine Grundstruktur der Lenksäule 1 ist im Wesentlichen spiegelsymmetrisch ausgebildet, der Zahnstangenabschnitt 12, der Elektromotor 13 und die Kämmvorrichtung 14 sind nur an einer Seite der Lenkrohrhaltevorrichtung 8 angeordnet.

In Fig. 5 ist eine bevorzugte Ausführungsform eines erfindungsgemäßen Kraftfahrzeugs 2 schematisch in einer Seitenansicht illustriert. Das Kraftfahrzeug 2 weist eine erfindungsgemäße Lenksäule 1 mit einer Cockpitanbindungsschnittstelle 9 auf. Die Cockpitanbindungsschnittstelle 9 ist an einem Cockpitträger 10 des Kraftfahrzeugs 2 gehalten, insbesondere über eine Gewindebolzenverbindung. Räder 7 des Kraftfahrzeugs 2 sind von der Lenksäule 1 mechanisch entkoppelt.

### Bezugszeichenliste

- 1: Lenksäule
- 2: Kraftfahrzeug
- 3: Lenkrohranordnung
- 4: Lenkradanbindungsschnittstelle
- 5: Lenkrad
- 6: Force-Feedback Aktuator
- 7: Rad
- 8: Lenkrohrhaltevorrichtung
- 8a: äußere Lenkrohrhaltevorrichtung
- 8b: innere Lenkrohrhaltevorrichtung
- 9: Cockpitanbindungsschnittstelle
- 10: Cockpitträger
- 11: Lenkrohrlagerung
- 12: Zahnstangenabschnitt
- 13: Elektromotor
- 14: Kämmvorrichtung
- 15: Innenverzahnung
- 16: Profil
- 17: Getriebeausgangswelle
- 18: Hebelarm

- S: Schwenkachse

## Patentansprüche

1. Elektrisch verstellbare Steer-by-Wire Lenksäule (1) für ein Kraftfahrzeug (2), aufweisend eine teleskopierbare Lenkrohranordnung (3) mit einer Lenkradanbindungsschnittstelle (4) zum Anbinden eines Lenkrads (5), einem Force-Feedback Aktuator (6) zum Simulieren einer Übertragung mechanischer Kräfte und/oder mechanischer Impulse von einer Fahrbahn über Räder (7) des Kraftfahrzeugs (2) zur Lenkradanbindungsschnittstelle (4) und eine Lenkrohrhaltevorrichtung (8) mit einer Cockpitanbindungsschnittstelle (9) zum Anbinden der Lenkrohrhaltevorrichtung (8) an einen Cockpitträger (10) des Kraftfahrzeugs (2) sowie einer Lenkrohrlagerung (11), wobei die Lenkrohranordnung (3) über die Lenkrohrlagerung (11) um eine horizontale Schwenkachse (S) relativ zur Cockpitanbindungsschnittstelle (9) schwenkbar gelagert ist,
**dadurch gekennzeichnet,**
**dass** die Lenksäule (1) einen Zahnstangenabschnitt (12) und einen Elektromotor (13) mit einer Kämmvorrichtung (14) zum Kämmen mit dem Zahnstangenabschnitt (12) aufweist, wobei der Zahnstangenabschnitt (12) und die Kämmvorrichtung (14) derart an der Lenksäule (1) angeordnet sind, dass durch Antreiben der Kämmvorrichtung (14) mittels des Elektromotors (13) die Lenkrohranordnung (3) relativ zur Cockpitanbindungsschnittstelle (9) um die Schwenkachse (S) verschwenkbar ist, wobei die Lenkrohrhaltevorrichtung (8) eine äußere Haltevorrichtung (8a) und eine innere Haltevorrichtung (8b) aufweist, wobei die innere Haltevorrichtung (8b) über die Lenkrohrlagerung (11) an der äußeren Haltevorrichtung (8a) um die Schwenkachse (S) drehbar gelagert ist, und wobei die innere Haltevorrichtung (8b) zwei parallel zueinander angeordnete sowie voneinander beabstandete Zahnstangenabschnitte (12) und der Elektromotor (13) zwei Kämmvorrichtungen (14) zum Kämmen mit jeweils einem der Zahnstangenabschnitte (12) aufweisen, wobei der Elektromotor (13) zwischen den Zahnstangenabschnitten (12) angeordnet ist.

2. Lenksäule (1) nach Anspruch 1,
**dadurch gekennzeichnet,**
**dass** der Zahnstangenabschnitt (12) an der inneren Haltevorrichtung (8b) und der Elektromotor (13) an der äußeren Haltevorrichtung (8a) angeordnet sind.

3. Lenksäule (1) nach Anspruch 1 oder 2,
**dadurch gekennzeichnet,**
**dass** die Kämmvorrichtung (14) als Zahnrad mit einer Außenverzahnung sowie einer Innenverzahnung (15) ausgebildet ist, wobei die Innenverzahnung (15) mit einem Profil (16) einer Rotorwelle des Elektromotors (13) oder einer Getriebeausgangswelle eines mit dem Elektromotor (13) gekoppelten Getriebes rotationsfest in Eingriff steht.

4. Lenksäule (1) nach Anspruch 3,
**dadurch gekennzeichnet,**
**dass** die Außenverzahnung als Schrägverzahnung ausgebildet ist.

5. Lenksäule (1) nach Anspruch 4,
**dadurch gekennzeichnet,**
**dass** die Lenksäule (1) zwei unmittelbar benachbarte schrägverzahnte Zahnstangenabschnitte (12) aufweist, wobei die Schrägverzahnungen der benachbarten Zahnstangenabschnitte (12) unterschiedlich ausgerichtet sind.

6. Lenksäule (1) nach Anspruch 1 oder 2,
**dadurch gekennzeichnet,**
**dass** die Kämmvorrichtung (14) als Schneckenrad ausgebildet ist.

7. Lenksäule (1) nach einem der vorangegangenen Ansprüche,
**dadurch gekennzeichnet,**
**dass** der Elektromotor (13) als Hohlwellenmotor ausgebildet ist.

8. Kraftfahrzeug (2), aufweisend eine elektrisch verstellbare Steer-by-Wire Lenksäule (1), **dadurch gekennzeichnet,**
**dass** die Lenksäule (1) nach einem der Ansprüche 1 bis 7 ausgebildet ist.

## Claims

1. Electrically adjustable steer-by-wire steering column (1) for a motor vehicle (2), comprising a telescopic steering tube arrangement (3) which has a steering wheel connection interface (4) for connecting a steering wheel (5), a force feedback actuator (6) for simulating a transmission of mechanical forces and/or mechanical pulses from a roadway via wheels (7) of the motor vehicle (2) to the steering wheel connection interface (4) and a steering tube holding device (8) which has a cockpit connection interface (9) for connecting the steering tube holding device (8) to a cockpit carrier (10) of the motor vehicle (2) and a steering tube bearing (11), wherein the steering tube arrangement (3) is pivotably mounted about a horizontal pivot axis (S) relative to the cockpit connection interface (9) via the steering tube bearing (11),
**characterized in that**
the steering column (1) has a rack portion (12) and an electric motor (13) which has a meshing device (14) for meshing with the rack portion (12), wherein the rack portion (12) and the meshing device (14) are arranged on the steering column (1) such that, by driving the meshing device (14) by means of the electric motor (13), the steering tube arrangement (3) can be pivoted about the pivot axis (S) relative to the cockpit connection interface (9), wherein the steering tube holding device (8) has an outer holding device (8a) and an inner holding device (8b), wherein the inner holding device (8b) is mounted on the outer holding device (8a) via the steering tube bearing (11) so as to be rotatable about the pivot axis (S), and wherein the inner holding device (8b) has two rack portions (12) arranged in parallel with one another and spaced apart from one another and the electric motor (13) has two meshing devices (14) for meshing with in each case one of the rack portions (12), wherein the electric motor (13) is arranged between the rack portions (12).

2. Steering column (1) according to claim 1,
**characterized in that**
the rack portion (12) is arranged on the inner holding device (8b) and the electric motor (13) is arranged on the outer holding device (8a).

3. Steering column (1) according to either claim 1 or 2,
**characterized in that**
the meshing device (14) is designed as a gear which has an external toothing and an internal toothing (15), wherein the internal toothing (15) is rotationally fixedly engaged with a profile (16) of a rotor shaft of the electric motor (13) or a transmission output shaft of a transmission coupled to the electric motor (13).

4. Steering column (1) according to claim 3,
**characterized in that**
the external toothing is designed as a helical toothing.

5. Steering column (1) according to claim 4,
**characterized in that**
the steering column (1) has two directly adjacent helically toothed rack portions (12), wherein the helical toothings of the adjacent rack portions (12) are oriented differently.

6. Steering column (1) according to either claim 1 or 2,
**characterized in that**
the meshing device (14) is designed as a worm wheel.

7. Steering column (1) according to any of the preceding claims,
**characterized in that**
the electric motor (13) is designed as a hollow shaft motor.

8. Motor vehicle (2) comprising an electrically adjustable steer-by-wire steering column (1), **characterized in that**
the steering column (1) is designed according to any of claims 1 to 7.

## Revendications

1. Colonne de direction (1) à direction par câble électrique (Steer-by-Wire) pouvant être réglée électriquement pour un véhicule automobile (2), présentant un agencement de tube de direction (3) télescopique comportant une interface de liaison à volant de direction (4) pour la liaison à un volant de direction (5), un actionneur à retour de force (6) pour la simulation d'une transmission de forces mécaniques et/ou d'impulsions mécaniques d'une chaussée par l'intermédiaire de roues (7) du véhicule automobile (2) à l'interface de liaison à volant de direction (4) et un dispositif de maintien de tube de direction (8) comportant une interface de liaison à cockpit (9) pour la liaison du dispositif de maintien de tube de direction (8) à un support de cockpit (10) du véhicule automobile (2) ainsi qu'un palier de tube de direction (11), l'agencement de tube de direction (3) étant monté de manière à pouvoir pivoter autour d'un axe de pivotement (S) horizontal par rapport à l'interface de liaison à cockpit (9) par l'intermédiaire du palier de tube de direction (11),
**caractérisée en ce**
**que** la colonne de direction (1) présente une section de crémaillère (12) et un moteur électrique (13) comportant un dispositif d'engrènement (14) pour l'engrènement avec la section de crémaillère (12), la section de crémaillère (12) et le dispositif d'engrènement (14) étant disposés sur la colonne de direction (1) de telle sorte que, en entraînant le dispositif d'engrènement (14) à l'aide du moteur électrique (13), l'agencement de tube de direction (3) peut pivoter autour de l'axe de pivotement (S) par rapport à l'interface de liaison à cockpit (9), le dispositif de maintien de tube de direction (8) présentant un dispositif de maintien extérieur (8a) et un dispositif de maintien intérieur (8b), le dispositif de maintien intérieur (8b) étant monté sur le dispositif de maintien extérieur (8a) de manière à pouvoir tourner autour de l'axe de pivotement (S) par l'intermédiaire du palier de tube de direction (11), et le dispositif de maintien intérieur (8b) présentant deux sections de crémaillère (12) disposées parallèlement l'une à l'autre et espacées l'une de l'autre et le moteur électrique (13) présentant deux dispositifs d'engrènement (14) pour l'engrènement avec respectivement une des sections de crémaillère (12), le moteur électrique (13) étant disposé entre les sections de crémaillère (12).

2. Colonne de direction (1) selon la revendication 1,
**caractérisée en ce**
**que** la section de crémaillère (12) est disposée sur le dispositif de maintien intérieur (8b) et le moteur électrique (13) est disposé sur le dispositif de maintien extérieur (8a).

3. Colonne de direction (1) selon la revendication 1 ou 2,
**caractérisée en ce**
**que** le dispositif d'engrènement (14) est réalisé sous forme de roue dentée comportant une denture extérieure ainsi qu'une denture intérieure (15), la denture intérieure (15) étant en prise de manière solidaire en rotation avec un profil (16) d'un arbre de rotor du moteur électrique (13) ou d'un arbre de sortie de boîte de vitesses d'une boîte de vitesses accouplée au moteur électrique (13).

4. Colonne de direction (1) selon la revendication 3,
**caractérisée en ce**
**que** la denture extérieure est réalisée comme une denture hélicoïdale.

5. Colonne de direction (1) selon la revendication 4,
**caractérisée en ce**
**que** la colonne de direction (1) présente deux sections de crémaillère (12) à denture hélicoïdale directement voisines, les dentures hélicoïdales des sections de crémaillère (12) voisines étant orientées différemment.

6. Colonne de direction (1) selon la revendication 1 ou 2,
**caractérisée en ce**
**que** le dispositif d'engrènement (14) est réalisé comme une roue tangente.

7. Colonne de direction (1) selon l'une des revendications précédentes, **caractérisée en ce**
**que** le moteur électrique (13) est réalisé comme un moteur à arbre creux.

8. Véhicule automobile (2), présentant une colonne de direction (1) à direction par câble électrique (Steer-by-Wire) pouvant être réglée électriquement,
**caractérisé en ce**
**que** la colonne de direction (1) est réalisée selon l'une des revendications 1 à 7.
